# EUROPÄISCHE PATENTANMELDUNG

(11) **EP 4 585 821 A2**
(43) Veröffentlichungstag der Anmeldung: **16.07.2025**
(21) Anmeldenummer: 25179331.1
(22) Anmeldetag: 28.05.2025
(51) Int. Cl.: F16F 1/38

(54) **LAGERANORDNUNG UND VERFAHREN ZUR HERSTELLUNG EINER LAGERANORDNUNG**

(71) Anmelder: Benteler Automobiltechnik GmbH, 33102 Paderborn (DE)
(72) Erfinder: Meding, Detlef, 33104 Paderborn (DE); Zimmardi, Giorgio, 33104 Paderborn (DE)
(74) Vertreter: Griepenstroh, Jörg

(57) **Zusammenfassung**

Lageranordnung 1 für ein Kraftfahrzeug mit einer Buchse 2 zur Aufnahme eines Gummimetalllagers 3, wobei die Buchse 2 aus einem Metallband hergestellt ist und miteinander verclinchte oder verschweißte Längskanten aufweist. An einer der Stirnkanten 7 ist wenigstens ein Flansch 8, 9, 10, 11 aus dem Metallband geformt. Der Flansch 8, 9, 10, 11 ist nach radial innen gerichtet und ist ein Anschlag für das eingesetzte Gummimetalllager.

## Beschreibung

Die Erfindung betrifft eine Lageranordnung gemäß den Merkmalen des Patentanspruchs 1 sowie ein Verfahren zur Herstellung einer solchen Lageranordnung gemäß den Merkmalen des Patentanspruchs 9.

Lageranordnungen mit Gummimetalllagern kommen bei Fahrwerkskomponenten von Kraftfahrzeugen zum Einsatz und werden beispielsweise an Hilfsrahmen oder Lenkern eines Kraftfahrzeugfahrwerks montiert. Bei Elektrofahrzeugen kommen die Lageranordnungen auch zur Halterung des E-Motors z. B. am Querträger des Achshilfsrahmens zum Einsatz.

Aus der DE 10 2009 051 159 A1 ist es bekannt, an Lagerbuchsen nach innen gerichtete Vorsprünge auszubilden, um eine formschlüssige Verbindung mit Vertiefungen zu schaffen und dadurch den Lagersitz in der Lagerbuchse zu verbessern. In fertigungstechnischer Hinsicht können Buchsen für derartige Lageranordnungen aus Rohrstücken hergestellt werden.

Der Erfindung liegt die Aufgabe zugrunde, eine Lageranordnung sowie ein Herstellungsverfahren für eine solche Lageranordnung mit einer Buchse zur Aufnahme eines Gummimetalllagers aufzuzeigen, wobei die Herstellung der Lageranordnung kostengünstig ist und eine präzise und sichere Positionierung des Gummimetalllagers in der Lageranordnung ermöglicht.

Die Aufgabe wird zum einen durch eine Lageranordnung gemäß den Merkmalen des Patentanspruches 1 gelöst. Ein Verfahren zur Herstellung einer Lageranordnung ist Gegenstand des Patentanspruches 9.

Die erfindungsgemäße Lageranordnung umfasst eine Buchse zur Aufnahme eines Gummimetalllagers. Die Buchse ist aus einem Metallband hergestellt. Sie besitzt durch eine Clinchverbindung miteinander verbundene Längskanten. Die sich in Axialrichtung gegenüberliegenden Stirnkanten sind unterschiedlich konfiguriert. Über eine der Stirnkanten wird das Gummimetalllager in die Buchse eingesetzt. Die andere gegenüberliegende Stirnkante weist einen aus dem Metallband geformten Flansch auf, der nach radial innen gerichtet ist. Der nach innen gerichtete Flansch dient als Anschlag für das eingesetzte Gummimetalllager und/oder für ein mit dem Gummimetalllager verbundenes Dämpfungselement.

Das Gummimetalllager selbst besitzt mindestens eine Elastomerschicht. Die Elastomerschicht kann mit einer Innenhülse und/oder einer Außenhülse verbunden sein. Die Außenhülse kann aus Metall oder Kunststoff bestehen. Wenn eine Außenhülse vorhanden ist, dient der Flansch als Anschlag für die Außenhülse. Anderenfalls kann der Flansch als Anschlag für die Elastomerschicht dienen. Ein aus dem Metallband selbst geformter Flansch ist ausgesprochen kostengünstig herstellbar. Hierzu kann das bereitgestellte Metallband vor der Umformung zu der Buchse bereits mit einem Flanschvorsprung versehen sein, wobei der Flanschvorsprung zu einem Flansch wird, wenn er nach radial innen gerichtet ist. Das Umbiegen nach radial innen bzw. das Umstellen des Flanschvorsprunges kann insbesondere durch ein Rollformverfahren erfolgen. Die gesamte Buchse wird vorzugsweise durch Rollformen in eine zylindrische Form gebracht, wobei der Flanschvorsprung vor, bei oder nach dem Rollformen zu dem nach innen gerichteten Flansch umgeformt werden kann. Beim Rollformen kann beispielsweise eine zusätzliche Profilierung des Metallbandes erfolgen, die sich über den Umfang der späteren Buchse erstreckt. Es kann beispielsweise an der Stirnkante ohne Flansche eine trichterförmige Erweiterung ausgebildet werden, welche als Einführschräge das Einsetzen des Gummimetalllagers erleichtert. Das Metallband kann geprägte Bereiche aufweisen, die später, d.h. nach dem Rollformen, als nach radial innen gerichtete Vorsprünge zur Befestigung des Gummimetalllagers dienen.

In vorteilhafter Weise ist an der Stirnkante nicht nur ein einziger Flansch vorhanden, sondern es sind mehrere, über den Umfang der Buchse verteilt angeordnete Flansche vorgesehen. Es handelt sich insbesondere um 2 bis 10, insbesondere 4 bis 8 Flanschabschnitte. Zwischen den benachbarten Flanschen befinden sich jeweils Freiräume. Die Flansche und Freiräume können unterschiedliche ausgestaltet sein. Die Flansche können z.B. die Form eines Kreisringstücks haben. Die Freiräume zwischen den Flanschen haben in diesem Fall eine konstante Breite. Das heißt, dass die an dem Metallstreifen ausgebildeten Flanschvorsprünge trapezförmig sind und eine verbreiterte Basis haben. Sie werden an der Basis gebogen, um die Flansche zu bilden. Die Trapezform wird in Anpassung auf den Durchmesser der Buchse in diesem Fall so gewählt, dass die Freiräume zwischen den Flanschen rechteckig sind, d.h. dass die seitlichen Kanten der Flansche parallel zueinander verlaufen. Die Flansche sollen sich an ihrer Basis, d.h. radial außen, über mindestens 30% und weniger als 100 % des Umfangsbereichs erstrecken. Die Flansche besitzen bevorzugt dieselbe Wanddicke wie das Metallband, aus dem die Buchse rollgeformt ist. Die Erfindung erfasst auch Flanschformen, bei denen die Freiräume keine konstante Breite haben, z.B. eine Breite, die nach radial innen abnimmt.

Wenn die Flansche vor dem Rollformen hergestellt werden, bekommt das Metallband vor dem Rollformen eine zusätzliche Stabilität. Bereits hierbei ist zu berücksichtigen, dass der Flanschvorsprung nicht zu groß sein darf bzw. dass der Flansch nicht zu weit nach radial innen reichen darf, um eine zu große Stauchung an den radial innen liegenden Enden der Flansche zu vermeiden. Es handelt sich bei den Flanschen daher lediglich um kürzere, randseitig orientierte Flansche, die die Mitte der Buchse frei lassen. Sie haben die Hauptfunktion, als Anschlag für den äußeren Bereich des Gummimetalllagers zu dienen.

Ein einzelner Flansch erstreckt sich an seiner Basis über weniger als 90° des Umfangs der Buchse, insbesondere über 20° bis 60°, insbesondere über 20° bis 50° des Umfangs der Buchse. Er ragt mit seiner in Radialrichtung der Buchse von der Innenseite der Buchse gemessenen Höhe nicht mehr als 50 % des inneren Radius der Buchse nach innen. Vorzugsweise liegt seine Höhe in einem Bereich von 10% und 40% des inneren Radius.

Die Flansche sollten für einen typischen Anwendungsfall bei Kraftfahrzeugen dafür geeignet sein, in Summe Axialkräfte von bis zu 5 kN aufzunehmen. Es ist daher sowohl für die Lastverteilung, als auch zur Materialausnutzung am besten, mehrere Flansche vorzusehen.

Die Flansche sollten daher gleichmäßig über den Umfang der Buchse verteilt angeordnet sein. Die mehreren Flansche bilden dabei vorzugsweise eine gemeinsame innere Anschlagsfläche für das Gummimetalllager aus, so dass die vom Gummimetalllager ausgehende Kraft gleichmäßig in die Anschlagfläche eingeleitet wird.

Das Gummimetalllager kann eine äußere Hülse besitzen, insbesondere aus Metall. Der Flansch ist mindestens so lang bzw. ragt so weit nach radial innen, dass diese Hülse an der durch den einen Flansch definierten oder an der durch die mehreren Flansche definierten inneren Anschlagfläche anliegt. Vorzugsweise ragt der Flansch jedoch nach radial innen über die Hülse hinaus, und zwar in den Bereich einer sich an die Hülse anschließenden Elastomerschicht. Sollte keine äußere Hülse vorhanden sein, reicht der Flansch auf jeden Fall in den Bereich der Elastomerschicht hinein. Die Elastomerschicht besitzt eine Schichtdicke, wobei diese in Radialrichtung gemessene Schichtdicke von dem Flansch bevorzugt zu ca. 10 bis 50 % von radial außen nach radial innen überdeckt wird. Die Angabe bezieht sich auf die radiale Erstreckung, nicht auf die stirnseitige Fläche der Elastomerschicht. Da zwischen den Flanschen stets ein Freiraum vorhanden ist, wird die Elastomerschicht nur im Bereich der Flansche übergriffen und erfährt auch nur in diesen Bereichen eine Abstützung. Insbesondere erstrecken sich die Flansche an ihrer Basis und auch an ihrer radial inneren Kante über mindestens 30 % des Umfangs, vorzugsweise über 60 bis 70 % des Umfangsbereiches.

In einer bevorzugten Ausgestaltung der Erfindung besitzt das Gummimetalllager eine Innenhülse und die besagte Elastomerschicht zwischen der Innenhülse und der Außenhülse. Die Elastomerschicht wird im Bereich von 10 bis 50 % ihrer Schichtdicke von dem Flansch von radial außen nach radial innen übergriffen. Das bedeutet, dass der innere, zur Innenhülse liegende Bereich der Elastomerschicht nicht von den Flanschen übergriffen wird.

Die Flansche sind durch Biegen an das Metallband geformt. Sie besitzen an ihrer Basis einen Biegeradius. Im Bereich des Biegeradius kommt die äußere Hülse mit den Flanschen in Kontakt. D.h. es gibt eine Axialanschlagfläche für die äußere Hülse, die nicht zwingend mit der Axialanschlagfläche zusammenfallen muss, die im Bereich der Elastomerschicht angeordnet ist. Bei größeren Biegeradien kann die Axialanschlagfläche für die Elastomerschicht entsprechend dem Biegeradius in einem kleinen Axialabstand zu der axialen Anschlagfläche für die äußere Hülse liegen. Durch einen größeren Biegeradius kann der axiale Abstand vergrößert werden. Dadurch wird erreicht, dass die äußere Hülse exakt positioniert ist und einen sicheren Anschlag besitzt, während die Bewegung der Elastomerschicht in Axialrichtung nicht unmittelbar durch die angrenzenden Flansche behindert wird. Es kann ein gewisses axiales Spiel für die Elastomerschicht im Bereich der Flansche vorhanden sein, so dass es auch bei Stauchung der Elastomerschicht zu einem ungehinderten axialen Ausstülpen der Elastomerschicht kommen kann. Durch den axialen Abstand kann Einfluss auf das Dämpfungsverhalten der Lageranordnung genommen werden. Ein kleinerer Abstand kann die Dämpfung in Axialrichtung erhöhen.

In einer vorteilhaften Weiterbildung der Erfindung ist vorgesehen, dass die Flansche eine gemeinsame äußere Axialanschlagfläche für ein Dämpfungselement definieren. Das Dämpfungselement ist mit dem Gummimetalllager verbunden, insbesondere im Bereich einer Innenhülse. Die Verbindung kann hergestellt werden, nachdem das Gummimetalllager in die Buchse eingesetzt wurde. Die Flansche greifen nun zwischen das Gummimetalllager und das axial zum Gummimetalllager angeordnete Dämpfungselement.

Das Dämpfungselement dient als zusätzlicher Schutz, wenn aufgrund einer negativen Axialkraft, also einer Axialkraft, die entgegen der Einpressrichtung gerichtet ist, die Gefahr besteht, dass das Gummimetalllager aus der Buchse gerissen wird. Durch das Dämpfungselement, welches sich an den Flanschen abstützt, wird auch das Gummimetalllager gehalten.

Das Dämpfungselement kann einen tragfähigen Stützkern besitzen, der mit einem elastomeren Material ummantelt ist. Der Stützkern ist insbesondere eine metallische Scheibe, die außenseitig gummiert ist. Der Flansch hat in dieser Ausgestaltung der Erfindung daher die zusätzliche Funktion, als axialer Anschlag für das axial wirkende Dämpfungselement zu dienen. Die Stützwirkung des Flansches ist in diesem Fall axial bidirektional. Die Flansche schaffen daher Axialanschlagflächen für Kräfte, die in Einpressrichtung als auch entgegen der Einpressrichtung wirken.

Das Gummimetalllager wird von der den Flanschen gegenüberliegenden Stirnseite eingepresst, wobei diese Stirnkante mit einem nach außen weisenden Kragenabschnitt versehen sein kann. Er kann trichterförmig sein, um zu zentrieren und um das Einpressen des Gummimetalllagers zu erleichtern. Die Stirnseite kann ebenso als Anschlag dienen, falls eine äußere Hülse des eingepressten Gummimetalllagers einen radialen Vorsprung, z.B. einen Kragen aufweist, der sich nach radial außen erstreckt und an der Stirnseite zur Anlage gebracht werden kann. Zur Vermeidung einer Doppelpassung kann eine solche äußere Hülse entweder an der einpressseitigen Stirnseite der Buchse oder an den radial nach innen weisenden Flanschen am anderen Ende der Buchse anliegen. Es kann daher sein, dass das Gummimetlalllager keinen Kontakt mit den Flanschen hat, sondern nur über die einpressseitige Stirnseite lageorientiert ist. Der Flansch wirkt in diesem Fall über seine äußere Axialanschlagfläche mit dem Dämpfungselement zusammen.

In einer Weiterbildung der Erfindung besitzt die Buchse auf ihrem Umfang nach radial innen gerichtete Vorsprünge, die zwischen den Stirnkanten der Buchse angeordnet sind. Die Vorsprünge sollen dazu beitragen, das Gummimetalllager in der Buchse sicher zu fixieren. Insbesondere sind in einer äußeren Hülse des Gummimetalllagers Vertiefungen angeordnet, in welche die radial nach innen gerichteten Vorsprünge der Buchse greifen. Die Buchse kann sich dadurch mit dem Gummimetalllager verkrallen. Die Vertiefungen können in Einschubrichtung eine erste Schräge mit geringer Neigung aufweisen und entgegen der Einschubrichtung eine steile Flanke besitzen. In Einpressrichtung des Gummimetalllagers kann die in Umfangsrichtung der Buchse gemessene Breite der Vorsprünge abnehmen. Zu den Flanschen weisende Enden der Vorsprünge können spitz, stumpf oder gerundet sein. Die Vorsprünge und Vertiefungen können gegengleich ausgebildet sein.

Die Schrägen mit geringer Neigung ermöglichen das einfache Einpressen des Gummimetalllagers. Die steile Flanke in Kombination mit dem in Einpressrichtung folgenden Flansch der Buchse bewirkt, dass der zwischen der Flanke und dem Flansch angeordnete Teil der äußeren Hülse bzw. des Gummimetalllagers präzise gehalten ist. Dadurch kann die Montagegeschwindigkeit und Genauigkeit der erfindungsgemäßen Lageranordnung verbessert werden. Das gegenseitige Verkrallen also der Formschluss erhöht die Sicherheit der Pressverbindung.

Das erfindungsgemäße Herstellverfahren für die Lageranordnung sieht die Herstellung einer Buchse aus einem Metallband vor, insbesondere aus Stahl. Hierzu wird an den Längskanten des Metallbandes eine Clinchverbindung oder eine Schweißverbindung hergestellt. Zudem werden an einer der beiden Stirnkanten des Metallbandes Flanschvorsprünge für die späteren Flansche hergestellt, insbesondere durch Stanzen oder Schneiden. Das Metallband wird zu der zylindrischen Buchse rollgeformt. Die Längskanten werden durch Clinchen miteinander verbunden, d.h. mittels Durchsetzfügen, bei dem die überlappend angeordneten Fügeteile hilfsfügeteilfrei miteinander verpresst werden. Hierzu können an den Längskanten Vorsprünge und Vertiefungen vorgesehen sein, die sich zum Clinchen überlappen. Bereits vor, während oder ggf. auch nach dem Rollformen werden die Flanschvorsprünge umgestellt, d.h. an ihrer Basis um insbesondere bis zu 90° gebogen, so dass sie im umgestellten Zustand bezogen auf die Buchse nach radial innen gerichtet sind. Sie dienen dort als Anschlag für das bereitgestellte und im Anschluss einzusetzende Gummimetalllager oder ein Dämpfungselement. Die Buchse, die als Aufnahme für das Gummimetalllager dient, kann vor dem Einsetzen des Gummimetalllagers an den zu lagernden Bauteilen befestigt werden, insbesondere durch eine Schweißverbindung. Die Buchse kann beispielsweise an einer Fahrwerkskomponente, insbesondere an einem Achshilfsrahmen oder an Lenkern eines Kraftfahrzeuges montiert werden. Das Einpressen der Gummimetalllager erfolgt in einem späteren Schritt.

In einer Weiterbildung der Erfindung wird ein Dämpfungselement mit dem eingepressten Gummimetalllager verbunden, so dass der wenigstens eine Flansch zwischen dem Gummimetalllager und dem Dämpfungselement angeordnet ist.

Zusätzlich können in der Buchse nach radial innen gerichtete Vorsprünge ausgebildet werden, um das eingepresste Gummimetalllager zu fixieren. Ergänzend können in einer äußeren Hülse des Gummimetalllagers radial äußere Vertiefungen ausgebildet werden, wobei die nach radial innen gerichteten Vorsprünge der Buchse in die Vertiefungen greifen. Die Vertiefungen und Vorsprünge sind vorzugsweise so orientiert, dass das Einpressen der Gummimetalllager mit geringer Kraft möglich ist, allerdings eine ungleich höhere Kraft erforderlich ist, um die Gummimetalllager wieder aus der Buchse in die entgegengesetzte Richtung zu entfernen. Die radial nach innen gerichteten Vorsprünge bzw. Vertiefungen besitzen daher flache Winkel und Schrägen in Einpressrichtung und steile Flanken bzw. große Winkel in den Kontaktbereichen, die dem Auspressen entgegenwirken. Auf diese Weise wird das Gummimetalllager zwischen den steilen Flanken und den radial nach innen gerichteten Flanschen präzise und sicher gehalten.

Die Erfindung wird nachfolgend anhand von in schematischen Zeichnungen dargestellten Ausführungsbeispielen näher erläutert. Es zeigen:
- Figur 1: eine perspektivische Ansicht einer Lageranordnung;
- Figur 2: die Lageranordnung der Figur 1 in einer weiteren Perspektive;
- Figur 3: eine perspektivische Ansicht einer Buchse einer Lageranordnung
- Figur 4: eine perspektivische Ansicht einer Buchse einer weiteren Lageranordnung.

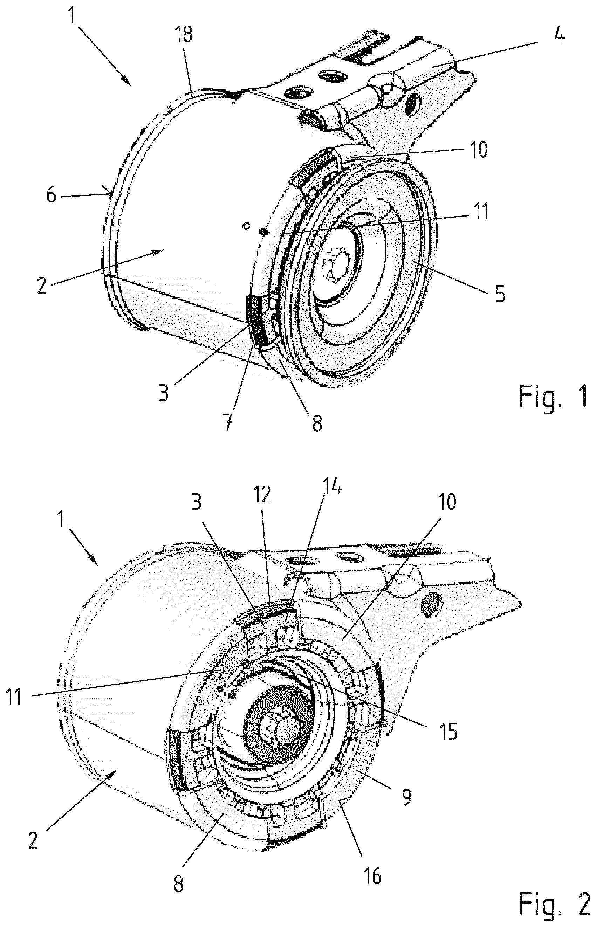

Die Figur 1 zeigt eine Lageranordnung 1 umfassend eine Buchse 2, in die ein Gummimetalllager 3 eingepresst ist. Die Buchse 2 ist mit einem Anbindungselement 4 verschweißt, das beispielsweise Bestandteil einer Fahrwerkskomponente oder eines Tragrahmens ist.

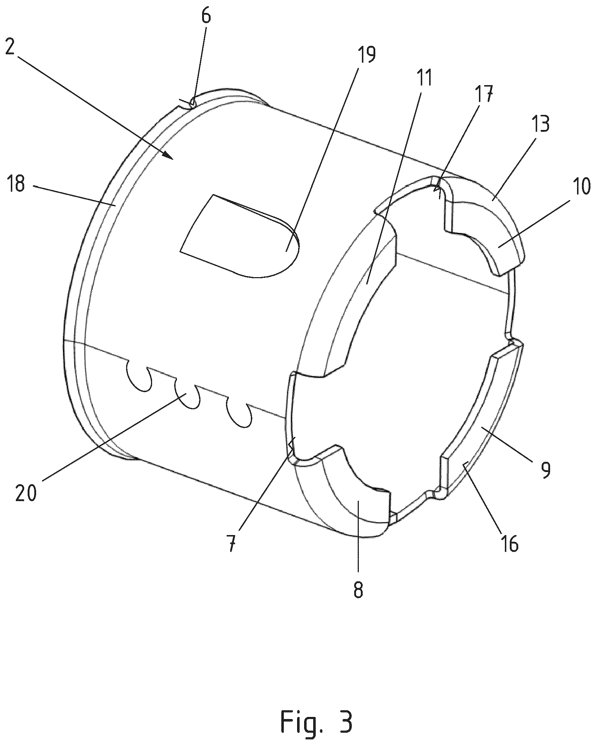

Das Gummimetalllager 3 ist stirnseitig zusätzlich mit einem Dämpfungselement 5 verbunden, es steht über die Buchse 2 in Axialrichtung vor. In der Darstellung der Figur 2 wurde das Dämpfungselement 5 zur besseren Veranschaulichung nicht dargestellt. Bei der Erfindung ist vorgesehen, dass die Buchse 2 aus einem Metallband hergestellt ist, das miteinander verclinchte Längskanten aufweist sowie in Axialrichtung gelegene Stirnkanten 6, 7. An eine der Stirnseiten 7 sind vier identische Flansche 8 - 11 geformt, die nach radial innen gerichtet sind. Die Flansche 8 - 11 sind am besten in den Figuren 2 und 3 zu erkennen.

Die Buchse 2 wird durch ein Rollformverfahren hergestellt. Die Flansche 8 - 11 sind aus dem Metallband der Buchse selbst geformt und haben dieselbe Wanddicke wie die Buchse 2. Das Metallband wird vor dem Rollformen im Bereich der Stirnkanten 6, 7 entsprechend vorkonfiguriert. Es können die an der Stirnseite 7 vorstehenden Flanschvorsprünge um 90° gebogen werden, so dass aus den Flanschvorsprüngen des Halbzeugs die Flansche 8 - 11 an dem fertigen Bauteil werden.

Die Flansche 8 - 11 sind gleichmäßig über den Umfang verteilt. Die Flansche 8 - 11 erstrecken sich über einen größeren Umfangsbereich als Freiräume zwischen den Flanschen 8 - 11. Die Flansche 8 - 11 ragen dabei deutlich nach radial innen, und zwar über eine Dicke einer äußeren Hülse 12 des Gummimetalllagers hinaus. Die Figur 12 zeigt die äußere Hülse 12, die in den Freiräumen zwischen den Flanschen 8 - 11 erkennbar ist. Sie stößt innen beim Einpressen des Gummimetalllagers 3 gegen die Innenseite der Flansche 8 - 11. Die Flansche 8 - 11 definieren zu diesem Zweck eine gemeinsame innere Axialanschlagfläche 17. Die Axialanschlagfläche 17 kann aufgrund des Biegeradius der Flansche 8 - 11 etwas in Axialrichtung versetzt zur Stirnkante 7 der Buchse 2 verlaufen. Die Krümmung in dem Biegebereich 13 (Figur 3) der Flansche 8 - 11 bewirkt, dass der sich an den Biegebereich 13 anschließende, ausschließlich nach radial innen weisende Teil der Flansche 8 - 11 im axialen Abstand zur Stirnkante 7 verläuft. D.h., dass die innere axiale Anschlagfläche 17 für die außenseitige Hülse 12 im Biegebereich 13 der Flansche 8 - 11 liegt, während die weiter radial innen liegenden Bereiche der Flansche 8 - 11 mit der Elastomerschicht 14 (Figur 2) in Kontakt kommen können. Die Elastomerschicht 14 befindet sich zwischen der äußeren Hülse 12 und einer Innenhülse 15. Die Elastomerschicht 14 besitzt eine Schichtdicke, die durch den Abstand zwischen Innenhülse 15 und äußerer Hülse 12 definiert ist.

Durch die axial außen liegenden Bereiche der Flansche 8 - 11 wird eine äußere Axialanschlagfläche 16 (Figur 2) definiert. Diese äußere axiale Anschlagfläche 16 kann in Kontakt mit dem Dämpfungselement 5 gelangen. Das Dämpfungselement 5 besitzt einen metallischen Kern, beispielsweise eine napfförmige Scheibe, die außenseitig mit einem Elastomer ummantelt ist. Die Figur 1 zeigt, dass die Flansche 8 - 11 zwischen das Dämpfungselement 5 und die Elastomerschicht 14 des Gummimetalllagers 3 greifen.

Das Gummimetalllager 3 wird von der den Flanschen 8 - 11 gegenüberliegenden Stirnseite 6 eingepresst. Die Einpressrichtung verläuft in der Bildebene dementsprechend von links nach rechts. An der einpressseitigen Stirnkante 6 ist die Buchse 2 mit einem nach außen weisenden Kragenabschnitt 18 als trichterförmige Erweiterung versehen, der das Einpressen des Gummimetalllagers 3 erleichtert. In diesem Fall ist der Kragenabschnitt 18 bis auf zwei kleinere Einkerbungen umlaufend ausgebildet. Mehrere Kragenabschnitte im Wechsel mit Kragenabschnittunterbrechungen erfüllen dieselbe Funktion.

Die Figur 3 zeigt an der Buchse 2 einen radial nach innen gerichteten Vorsprung 19 in Form einer Einprägung an der Außenseite der Buchse 2. Die Einprägung hat ein stumpfes und ein gerundete Ende, wobei das gerundete Ende zu den Flanschen 8 - 11 weist. In nicht näher dargestellter Weise sind mehrere derartige Einprägungen über den Umfang der Buchse 2 verteilt angeordnet. Ein durch die Einprägung innenseitig der Buchse 2 nach radial innen vorstehender Vorsprung 19 soll die äußere Hülse 12 des Gummimetalllagers 3 nach dem Einpressen sicher halten. Hierzu können in der äußeren Hülse 12 radial nach innen gerichtete Vertiefungen ausgebildet sein, die zu den Vorsprüngen 19 in der Buchse 2 der Lageranordnungen passen. Die äußere Hülse 12 wird zwischen dem gerundeten und tiefer liegenden Ende der Vorsprünge 19 und den Flanschen 8 - 11 exakt positioniert und wird dort sicher gehalten. Zusätzlich ist eine Clinchverbindung 20 an den Längskanten des Metallbandes dargestellt, aus dem die Buchse 2 hergestellt ist.

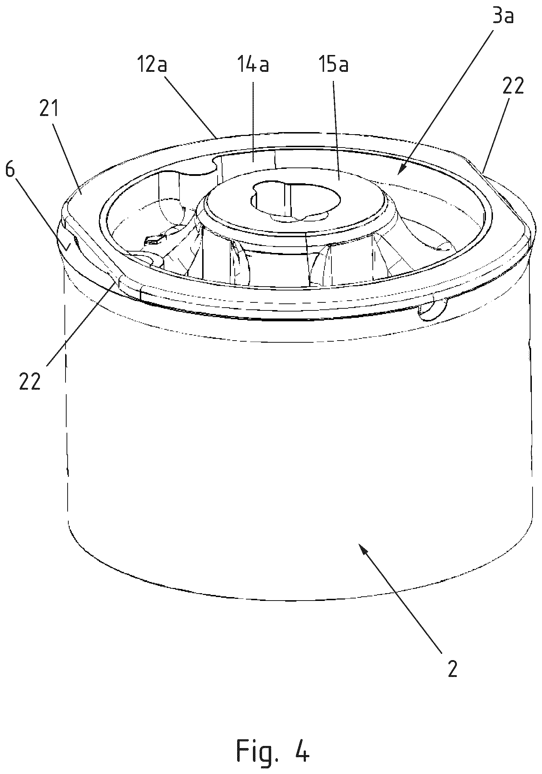

Die Figur 4 zeigt eine Buchse 2 mit perspektivischem Blick von ihrer Stirnseite 6. Das ist die Einpressseite der Buchse 2. Es ist ein eingepresstes Gummimetalllager 3a zu erkennen, das einen radial nach außen weisenden Kragen 21 an seiner äußeren Hülse 12a mit zwei diametral angeordneten Unterbrechungen 22 aufweist. Der Kragen 21 liegt an der einpressseitigen Stirnkante 6 der Buchse 2. Die äußere Hülse 12a besteht in diesem Fall aus einem Kunststoff. Die Unterbrechungen 22 bilden Werkzeuganlageflächen, um das Gummimetalllager 3a wieder aus der Buchse 2 entfernen zu können. Das Gummimetalllager 3a besitzt eine Innenhülse 15a und eine Elastomerschicht 14a zwischen der äußeren Hülse 12a und der Innenhülse 15a.

### Bezugszeichen:

- 1 -: Lageranordnung
- 2 -: Buchse
- 3 -: Gummimetalllager
- 3a -: Gummimetalllager
- 4 -: Anbindungselement
- 5 -: Dämpfungselement
- 6 -: Stirnkante von 2
- 7 -: Stirnkante von 2
- 8 -: Flansch
- 9 -: Flansch
- 10 -: Flansch
- 11 -: Flansch
- 12 -: äußere Hülse von 3
- 12a -: äußere Hülse von 3a
- 13 -: Biegebereich von 8, 9, 10, 11
- 14 -: Elastomerschicht von 3
- 14a -: Elastomerschicht von 3a
- 15 -: Innenhülse von 3
- 15a -: Innenhülse von 3a
- 16 -: äußere Axialanschlagfläche von 8, 9, 10, 11
- 17 -: innere Axialanschlagfläche von 8, 9, 10, 11
- 18 -: Kragenabschnitt an 2
- 19 -: Vorsprung an 2
- 20 -: Clinchverbindung an 2
- 21 -: Kragen von 3a
- 22 -: Unterbrechung von 21

## Patentansprüche

1. Lageranordnung (1) für ein Kraftfahrzeug mit einer Buchse (2) zur Aufnahme eines Gummimetalllagers (3, 3a), wobei die Buchse (2) aus einem Metallband hergestellt ist und durch eine Clinchverbindung oder durch eine Schweißverbindung miteinander verbundene Längskanten aufweist und wobei die Buchse (2) Stirnkanten (6, 7) aufweist, **dadurch gekennzeichnet, dass** an eine der Stirnkanten (7) wenigstens ein Flansch (8, 9, 10, 11) aus dem Metallband geformt ist, wobei der Flansch (8, 9, 10, 11) nach radial innen gerichtet ist und eine Axialanschlagfläche (16, 17) definiert.

2. Lageranordnung (1) nach Anspruch 1, **dadurch gekennzeichnet, dass** an der Stirnkante (7) mehrere über den Umfang der Buchse (2) verteilt angeordnete Flansche (8, 9, 10, 11) angeordnet sind.

3. Lageranordnung (1) nach Anspruch 1 oder 2, **dadurch gekennzeichnet, dass** das Gummimetalllager (3, 3a) eine äußere Hülse (12, 12a) aufweist, die an dem wenigstens einen Flansch (8, 9, 10, 11) anliegt, wobei der wenigstens eine Flansch (8, 9, 10, 11) nach radial innen über die Hülse (12) vorsteht.

4. Lageranordnung (1) nach Anspruch 3, **dadurch gekennzeichnet, dass** das Gummimetalllager (3, 3a) eine Innenhülse (15, 15a) und eine Elastomerschicht (14, 14a) zwischen der Innenhülse (15, 15a) und der äußeren Hülse (12, 12a) aufweist, wobei die Elastomerschicht (14, 14a) eine Schichtdicke besitzt und wobei der wenigstens eine Flansch (8, 9, 10, 11) 10% bis 50% der Schichtdicke nach radial innen übergreift.

5. Lageranordnung nach einem der Ansprüche 2 bis 4, **dadurch gekennzeichnet, dass** die Flansche (8, 9, 10, 11) eine gemeinsame äußere Axialanschlagfläche (16) für ein Dämpfungselement (5) definieren, wobei das Dämpfungselement (5) mit dem Gummimetalllager (3, 3a) verbunden ist, wobei die Flansche (8, 9, 10, 11) zwischen dem Gummimetalllager (3, 3a) und dem Dämpfungselement (5) angeordnet sind.

6. Lageranordnung (1) nach einem der Ansprüche 1 bis 5, **dadurch gekennzeichnet, dass** an der einpressseitigen Stirnkante (6) der Buchse (2) wenigstens ein nach außen weisender Kragenabschnitt (18) ausgebildet ist.

7. Lageranordnung (1) nach einem der Ansprüche 1 bis 6, **dadurch gekennzeichnet, dass** die Buchse (2) nach radial innen gerichtete Vorsprünge (19) aufweist, die zwischen den Stirnkanten (6, 7) angeordnet sind.

8. Lageranordnung (1) nach Anspruch 7, **dadurch gekennzeichnet, dass** in einer äußeren Hülse (12) des Gummimetalllagers (3, 3a) Vertiefungen angeordnet sind, in welche die radial nach innen gerichteten Vorsprünge (19) der Buchse (2) greifen.

9. Verfahren zur Herstellung einer Lageranordnung (1) mit den Merkmalen nach einem der Ansprüche 1 bis 8, **dadurch gekennzeichnet, dass** ein Metallband bereitgestellt wird mit Längskanten für eine Clinchverbindung oder Schweißverbindung und wobei an einer Stirnkante (7) wenigstens ein Flanschvorsprung ausgebildet wird, wobei das Metallband zu einer zylindrischen Buchse (2) rollgeformt wird, wobei die Längskanten durch Clinchen oder Schweißen miteinander verbunden werden und wobei der wenigstens eine Flanschvorsprung vor, bei oder nach dem Rollformen zu einem nach radial innen gerichteten Flansch (8, 9, 10, 11) umgeformt wird, als Anschlag für ein bereitgestelltes Gummimetalllager, das in die gerollte Buchse (2) eingepresst wird.

10. Verfahren nach Anspruch 9, **dadurch gekennzeichnet, dass** ein Dämpfungselement (5) mit dem eingepressten Gummimetalllager (3, 3a) verbunden wird, so dass der wenigstens eine Flansch (8, 9, 10, 11) zwischen dem Gummimetalllager (3, 3a) und dem Dämpfungselement (5) angeordnet ist.

11. Verfahren nach Anspruch 9 oder 10, **dadurch gekennzeichnet, dass** in dem bereitgestellten Metallband Vorsprünge (19) ausgebildet werden, die nach dem Rollformen zu der Buchse (2) nach radial innen weisen.

12. Verfahren nach Anspruch 11, **dadurch gekennzeichnet, dass** in einer äußeren Hülse (12) des Gummimetalllagers (3, 3a) radial äußere Vertiefungen ausgebildet werden, wobei die nach radial innen gerichteten Vorsprünge (19) der Buchse (2) in die Vertiefungen greifen, wenn das Gummimetalllager (3, 3a) in die Buchse (2) gepresst wird.
